# NEUE EUROPÄISCHE PATENTSCHRIFT

(11) **EP 1 586 520 B2**
(45) Veröffentlichungstag und Bekanntmachung des Hinweises auf die Entscheidung über den Einspruch: **09.09.2009**
(45) Hinweis auf die Patenterteilung: 03.01.2007
(21) Anmeldenummer: 04405686.9
(22) Anmeldetag: 09.11.2004
(51) Int. Cl.: B65G 47/57, B65G 47/51, A23G 7/00

(54) **Zwischenspeicher**
Intermediate buffer
Tampon intermédiaire

(30) Priorität: 14.04.2004 CH 6462004
(43) Veröffentlichungstag der Anmeldung: 19.10.2005
(73) Patentinhaber: Rotzinger AG, 4303 Kaiseraugst (CH)
(72) Erfinder: Kurt, Philipp, 79639 Grenzach-Wyhlen (DE)
(74) Vertreter: Eder, Carl E.

(56) Entgegenhaltungen:
- EP-A- 0 732 279
- EP-B- 1 608 573
- GB-A- 1 035 884
- US-A- 1 837 605
- US-A- 5 636 722

## Beschreibung

Die Erfindung betrifft einen Zwischenspeicher gemäss dem Oberbegriff des Patentanspruches 1. Es ist bekannt, dass in Stückgutform vorliegende Kleinprodukte, wie z. B. Backwaren oder Schokoladenriegel, beim Übergang von der Produktionsstätte zu einer Weiterbehandlungsstelle, zum Beispiel einer Verpackungsstation, reihenweise so befördert werden, dass deren Förderrichtung quer zur Achse dieser Produktreihen verläuft. Ein bei der Förderung solcher Produkte zwangsläufig auftretendes Problem ergibt sich daraus, dass es praktisch unmöglich ist, Produktion und Verpackung mit der gleichen Kadenz arbeiten zu lassen. Insbesondere wird es im Produktionsablauf immer wieder zeitliche Unterbrüche geben und auch bei der Verpackung dieser heiklen Güter lassen sich unvorhergesehene oder auch einzuplanende Pausen nicht vermeiden.

Man ist daher schon frühzeitig dazu übergegangen, die Produktionsstätte mit der Verpackungsstation durch Zwischenspeicher zu verbinden, in denen die produzierten Waren zwischengelagert und dann nach Bedarf vom Verpackungspersonal oder der Verpackungsmaschine abgerufen werden können.

Zur Förderung werden die Produkte dabei in Transportgestellen eingelagert, die mit einer Anzahl von Tablaren zur Aufnahme der Produkte versehen sind.

Ein dem vorgenannten Zweck dienender Zwischenspeicher ist aus der europäische Patentschrift EP 0 732 279 bekannt. Der dort beschriebene Zwischenspeicher weist einen Eingabeelevator auf, der die Transportgestellt vertikal an dem sie bedienenden Einlaufförderer schrittweise vorbeiführt und von dort in eine erste Stauzone fördert. Ein Ausgabeelevator entnimmt nach Bedarf die gefüllten Transportgestelle aus der Stauzone und führt sie abwärts an einer Ausgabevorrichtung vorbei und nach der Entleerung in eine zweite Stauzone. Die durch die Ketten der beiden Elevatoren aufgespannten Ebenen liegen dabei parallel zur Bewegungsrichtung der Transportgestelle in den Stauzonen.

Sowohl der Eingabeelevator als auch der Ausgabeelevator ist nach diesem Vorschlag mit je einem über mindestens vier ortsfeste Umlenkräder geführten Kettenpaar ausgerüstet. Jedes dieser beiden Kettenpaare weist auf jeder Seite des Förderweges je eine endlos umlaufende Kette auf und ist mit Mitnehmern zum Erfassen der im Kettenbereich angelieferten Transportgestelle versehen. Diese dienen somit für das im Arbeitstakt verlaufende Beladen eines Transportgestelles, für die Übernahme des nächsten Transportgestelles und ausserdem auch noch für die im oberen und unteren Bereich an den Vertikalhub angrenzenden Horizontalverschiebungen. Durch diese Ausbildung kann zwar erreicht werden, dass die Elevatoren nicht nur eine vertikale, sondern auch zwei horizontale Bewegungskomponenten ausführen und dadurch die Anzahl der Einzelantriebe reduziert werden, doch ergibt sich durch diese Mehrfachfunktion der Elevatoren eine unerwünschte Beeinflussung der im oberen bzw. unteren Förderbereich stattfindenden Vorgänge, was die Dynamik und Flexibilität des Systems beeinträchtigt. Da nämlich in den meisten Fällen ein rascher Durchlauf der Transportgestelle durch den Speicher sehr erwünscht ist und daher in den beiden Elevatoren die Transportgestelle möglichst ohne Zwischenabstände aufeinanderfolgen sollen, zeigt sich die bekannte Lösung nicht flexibel genug, um die Zwischenräume benachbarter Transportgestelle bei der Vertikalförderung auf ein Minimum zu beschränken und, insbesondere bei hohen Durchlaufgeschwindigkeiten, die stabile Lage der Transportgestelle zu gewährleisten.

Da sich bei dieser Anordnung zwischen zwei aufeinander folgenden Transportgestellen ein unerwünschter Abstand nicht vermeiden lässt, muss zur Gewährleistung eines kontinuierlichen Betriebes eine weitere Vorrichtung angebracht werden: Daher ist das am Eingang des Speichers angeordnete Förderband derart schwenkbar ausgebildet, dass sein freies Ende höhenverstellbar ist. Damit ist aber ein zusätzlicher konstruktiver Aufwand verbunden, der ferner eine weitere, von der Bewegung der Transportgestelle abzuleitende Steuerung bedingt.

Es ist die Aufgabe der vorliegenden Erfindung, einen Zwischenspeicher vorzuschlagen, welcher einen gleichmässigen, lücken- und staudrucklosen Durchgang der Produkte gestattet und damit die Voraussetzungen für die Einhaltung einer konstanten Produktionsgeschwindigkeit schafft. Im Hinblick auf eine dynamische und unabhängige Steuerung der bei der Vertikalförderung aufeinander folgenden Transportgestelle sollte der Elevatorprozess dabei sowohl im Eingabe-, als auch im Ausgabebereich so steuerbar sein, dass keine Zwischenräume zwischen vertikal benachbarten Transportgestellen auftreten, so dass ein kontinuierlicher Produktionsablauf gesichert ist.

Diese Aufgabe wird durch die im kennzeichnenden Teil des Patentanspruchs 1 definierte Erfindung gelöst. Bevorzugte Ausführungsbeispiele sind in den abhängigen Ansprüchen definiert. Dank dieser erfindungsgemässen Ausbildung des Zwischenspeichers ergibt sich nun, dass sowohl bei der Eingabestation wie auch bei der Ausgabestation jedes zweite, einem ersten folgende Transportgestell lückenlos die nächste ankommende Produktreihe aufnehmen kann. Dies bedeutet, dass ein Produktefluss mit hoher Kadenz kontinuierlich und ohne Unterbruch möglich wird, weil immer ein leeres Transportgestell zur Verfügung steht. Sobald ein Transportgestell beladen ist, wird dieses sofort vom Taktbetrieb entkoppelt nach oben bewegt und in eine erste Stauzone abgeschoben, während gleichzeitig, d.h. in kontinuierlichem Durchgang, ein leeres Transportgestell zur Befüllung im Takt nach oben bewegt wird. Da der Taktbetrieb somit auf den reinen Be- und Entladevorgang reduziert ist, werden die in den Transportgestellen mitgeführten Produkte in Schubrichtung nur sehr gering beschleunigt, so dass sie nicht verrutschen oder herunterfallen können.

Auch am Auslauf des Zwischenspeichers können die Produkte kontinuierlich, also ohne Unterbruch in Richtung der Verpakkungsstation ausgeschoben werden, da hier immer ein volles Transportgestell bereitsteht. Während ein Transportgestell entladen wird, wird entkoppelt simultan das vorher entleerte Transportgestell nach unten bewegt, entladen und dann leer in die zweite Stauzone abgegeben. Während somit sowohl der Beladungs- wie auch der Entladungsvorgang pausenfrei im Taktbetrieb erfolgen kann, verläuft die sich an die Beladung anschliessende und die der Entladung vorausgehende Vertikalbewegung gleich wie die vorausgehende, bzw. nachfolgende Horizontalbewegung. Dadurch wird ein ruhiger und damit sicherer Materialfluss gewährleistet.

Die Aufteilung des Gesamt-Vertikalantriebs auf zwei unabhängig angetriebene Kettenpaare ist der Garant für die lükkenlose und staudruckfreie Förderung der Transportgestelle und gestattet ferner auch, die Relativposition benachbarter Transportgestelle nach Bedarf zu steuern.

Damit gemäss einer bevorzugten Ausführungsform des Erfindungsgedankens entladungsseitig zwei benachbart übereinander liegende Produktreihen gleichzeitig aus dem Transportgestell auf einen Horizontalförderer ausgeschoben werden können, ist oberhalb des Horizontalförderers eine Abstellplatte angeordnet, die die obere Produktereihe vorübergehend aufnimmt und anschliessend auf den Horizontalförderer abgibt.

Bei einem bevorzugten Ausführungsbeispiel ist dicht über dem zur Verpackungsstation führenden Horizontalförderer, der im Wesentlichen aus einem Fördergurt besteht, eine Schubleiste angeordnet, die die auf dem Fördergurt abgelegten Produktreihen sofort, nachdem sie abgelegt worden sind, mit der Fördergeschwindigkeit des Fördergurtes anschiebt und so verhindert, dass die einzelnen Reihen anfänglich mit einer Geschwindigkeit transportiert werden, die kleiner ist als die Fördergurtgeschwindigkeit, und damit auch verhindert, dass ein Geschwindigkeitsunterschied zwischen Fördergurt und Fördergut und dadurch ein Abrieb des letzteren entsteht, der eine Verschmutztung des Fördergurtes zur Folge hätte.

Nachstehend wird anhand der beiliegenden sehr schematische Zeichnung ein Ausführungsbeispiel eines erfindungsgemässen Zwischenspeichers beschrieben. In der Zeichnung zeigen
die Fig. 1 eine Seitenansicht der wesentlichen Teile eines erfindungsgemässen Zwischenspeichers,
die Fig. 2 eine Stirnansicht der wesentlichen Teile in Richtung des Pfeiles II der Fig. 1,
die Fig. 3 eine Stirnansicht der wesentlichen Teile in Richtung des Pfeiles III der Fig. 1,
die Fig. 4 eine Seitenansicht in eine weiteren Phase der Produktebewegung,
die Fig. 5 eine Stirnansicht in Richtung des Pfeiles V der Fig. 4,
die Fig. 6 eine Stirnansicht in Richtung des Pfeiles VI der Fig. 4,
die Fig. 7 und 8 eine schematische Darstellung eines Ausführungsdetails der Entladestation.

Um die wesentlichen Merkmale der Erfindung gut darstellen und beschreiben zu können, sind in der Zeichnung nur die Transportgestelle und - rein schematisch - die verschiedenen Förderer für die Transportgestelle dargestellt, nicht jedoch die Führungsschienen und die übrigen zum Betrieb des Speichers nötigen konstruktiven Details.

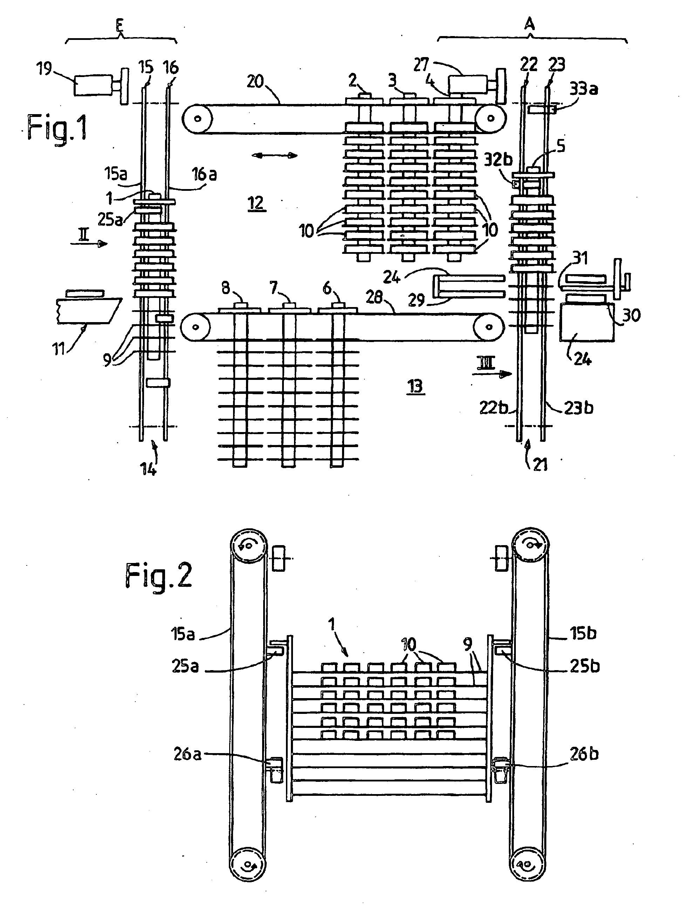

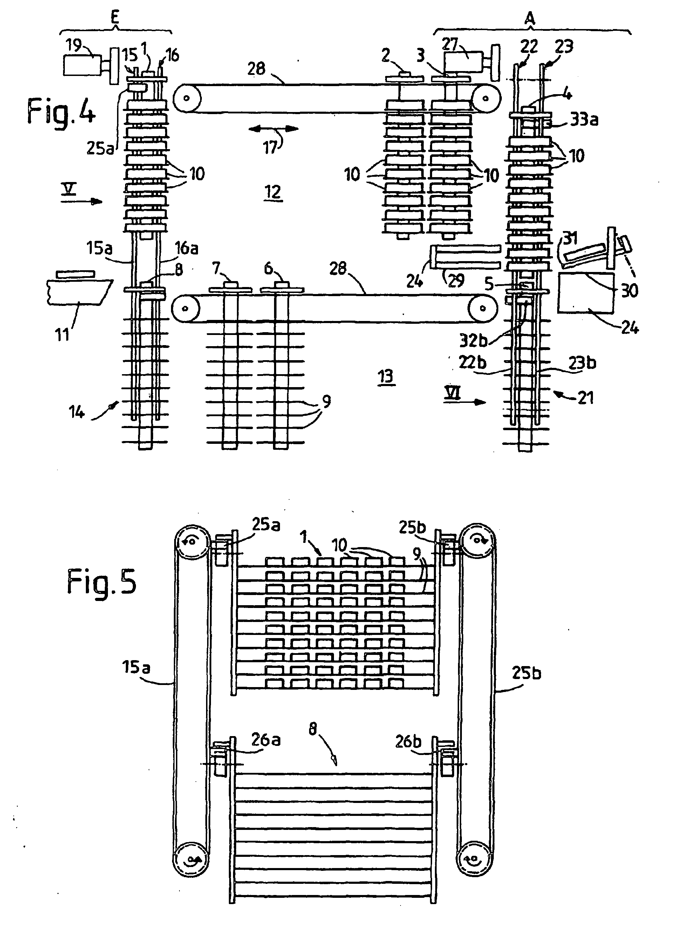

Der in der Zeichnung dargestellte Zwischenspeicher enthält acht Transportgestelle, die mit 1 - 8 bezeichnet sind. Jedes dieser Transportgestelle ist hier mit zehn äquidistanten Tablaren 9 ausgerüstet, wobei die Grösse der Tablare und ihr gegenseitiger Abstand der Grösse und dem Gewicht der zu transportierenden Produkte 10 angepasst sind. Der Zwischenspeicher hat eine Eingabestation E und eine Ausgabestation A und zwischen diesen beiden Stationen zwei Stauzonen, eine erste mit 12 bezeichnete für die beladenen Transportgestelle im oberen Teil des Speichers und eine zweite mit 13 bezeichnete für die leeren Transportgestelle im unteren Teil des Speichers. Selbstverständlich muss jede der beiden Stauzonen 12 und 13 so gross sein, dass sie alle minus zwei im ganzen Zwischenspeicher vorhandene, im gezeichneten Beispiel also sechs Transportgestelle aufnehmen kann, was aus den Figuren 1 und 4 nicht genau ersichtlich ist.

Die Eingabestation E enthält eine hier nur ganz schematisch angedeutete mit 11 bezeichnete Beschickungsvorrichtung. Zur Eingabestation gehört des Weiteren ein hier als Ganzes mit 14 bezeichneter Vertikalförderer, der dazu dient, die aus der zweiten Stauzone 13 zugeschobenen leeren Transportgestelle im Taktbetrieb, also schrittweise entsprechend dem Abstand der Tablare 9 an der Beschickungsvorrichtung 11 vorbei zu fördern, damit dort die einzelnen Tablare 9 jedes Transportbehälters mit den von einer Produktionsstätte zugeführten Produkten, also beispielsweise mit je einer Reihe von Schokoladeriegeln oder Biscuits beladen werden können. Dieser Vertikalförderer 14 weist nun zwei mit voneinander unabhängigen Antrieben versehene Kettenpaare 15 und 16 auf, von denen in den Figuren 1 und 4 die Ketten 15a und 16a, in den Figuren 2 und 5 die Ketten 15a und 15b des Kettenpaares 15 sichtbar sind, die dort ihrerseits die Sicht auf die Ketten 16a und 16b des Kettenpaares 16 verdecken.

Aus der Zeichnung ist ersichtlich, dass alle vier Ketten so angeordnet sind, dass jede durch die beiden Trume einer Kette aufgespannte Ebene senkrecht zur Förderrichtung 17 der Transportgestelle in den Stauzonen 12 und 13 steht.

In den Figuren 1 und 2 sind nun bereits sechs der zehn Tablare 9 des Transportgestelles 1 beladen. Nach dem nächsten Aufwärtsschritt des Förderers wird das folgende, also das siebte Tablar beladen. Jede Kette weist einen Mitnehmer auf, um die einzelnen Transportgestelle nach oben zu fördern, so besitzt die Kette 15a den Mitnehmer 25a, die Kette 15b, den Mitnehmer 25b, die beide zusammen das Transportgestell 1 nach oben fördern. Die Kette 16a hat den Mitnehmer 26a und die nicht sichtbare Kette 16b den Mitnehmer 26b.

Sobald nun beim schrittweisen Verschieben nach oben des Transportgestelles 1 das letzte, also das zehnte Tablar 9 dieses Transportgestelles 1 beladen ist, sorgen, wie aus den Figuren 4 und 5 ersichtlich ist, die mit je einem Mitnehmer versehenen Ketten des zweiten Kettenpaares 16 dafür, dass ein folgendes Transportgestell, das hier mit 8 bezeichnet und kurz vor dem Beladen des zehnten Tablars des Transportgestelles 1 der unteren, also der zweiten Stauzone 13 entnommen worden ist, dem Transportgestell 1 praktisch abstandslos folgt und von diesem Kettenpaar im Taktbetrieb, also schrittweise nach oben gefördert wird, damit auch dieses Transportgestell 8 durch die Beschickungsvorrichtung 11 beladen werden kann. Gleichzeitig fördern die beiden Ketten 15a und 15b des ersten Kettenpaares 15 das Transportgestell 1 ganz nach oben, wo es von einem als Schieber dienenden Hilfsmittel 19 dem Stauraumförderer 20 in der oberen, also ersten Stauzone 12 übergeben wird. Dieser ist so ausgebildet, dass die einzelnen Transportgestelle möglichst nah an den in den Figuren 1 und 4 der Zeichnung rechts befindlichen Ausgang gelangen, wo sie sich stauen.

Wenn nun das zweite Transportgestell 8 gefüllt ist, wird es, vom Taktbetrieb entkoppelt, ganz nach oben und von dort zum Stauraumförderer 20 in der oberen ersten Stauzone 12 befördert.

Unterdessen hat aber das erste Kettenpaar 15a/15b bereits das folgende, also das dritte Transportgestell 7 übernommen und so nach oben transportiert, dass es praktisch abstandslos an das zweite Transportgestell 8 anschliesst, so dass einerseits die Beschickungsvorrichtung 11 unterbruchslos arbeiten kann und andererseits bei der Horizontalverschiebung des Transportgestelles keine zum Schaukeln Anlass gebenden Geschwindigkeitsänderungen auftreten.

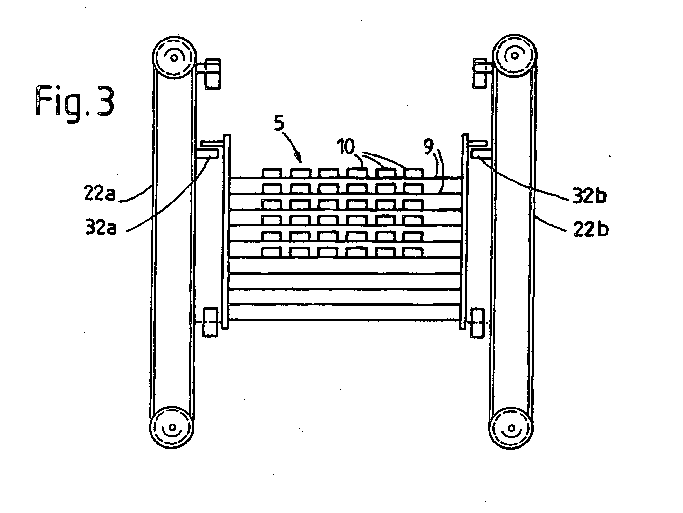

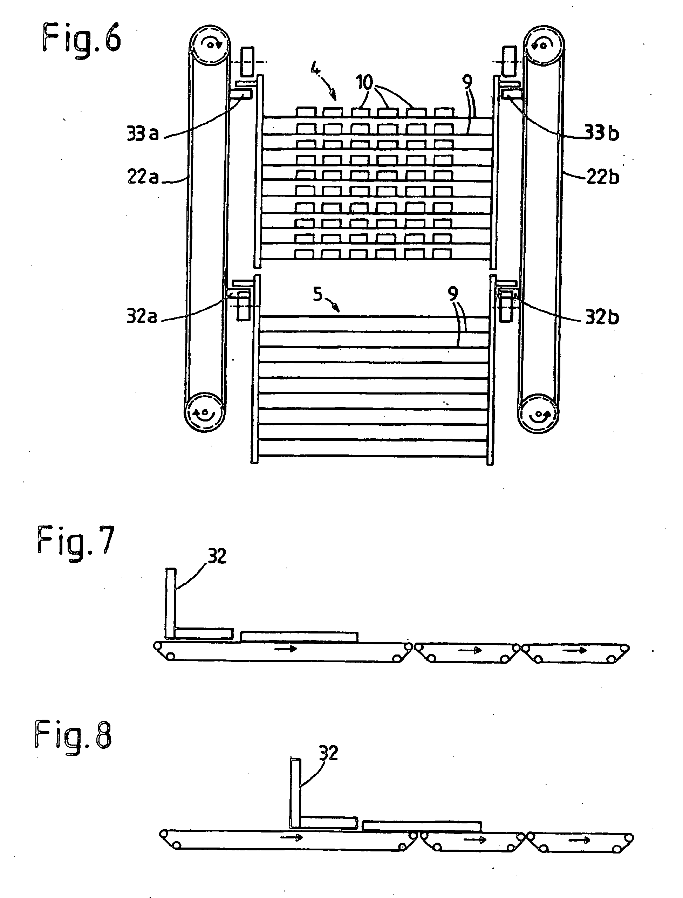

Analog zur Eingabestation E ist die Ausgabestation A ausgestaltet: Hier ist der Vertikalförderer als Ganzes mit 21 bezeichnet. Er dient dazu, die einzelnen Transportgestelle an der als Ganzes mit 24 bezeichneten Entladevorrichtung von oben nach unten vorbei zu führen. Auch er weist zwei mit voneinander unabhängigen Antrieben versehene, mit 22 und 23 bezeichnete Kettenpaare auf, von denen in den Figuren 1 und 4 nur die Ketten 22b und 23b, in den Figuren 3 und 6 aber die Ketten 22a und 22b des Kettenpaares 22 sichtbar sind.

Die Kette 22a hat einen Mitnehmer 32a, die Kette 22b einen Mitnehmer 32b, die Kette 23b einen Mitnehmer 33b und die nicht sichtbare Kette 23a einen Mitnehmer 33a. Auch hier sind, wie das aus der Zeichnung ersichtlich ist, alle Ketten so angeordnet, dass die durch ihre beiden Trume aufgespannten Ebenen senkrecht zur Verschieberichtung 17 der Transportgestelle in den Stauzonen 12 und 13 stehen.

Wie in den Figuren 1 und 3 dargestellt ist, fördert das Kettenpaar 22a/22b zuerst das Transportgestell 5 schrittweise an der Entladevorrichtung 24 vorbei nach unten, so dass diese Entladevorrichtung die einzelnen Tablare 9 entladen kann. Bevor das letzte Tablar entladen ist, übergibt das als Schieber ausgebildete Hilfsmittel 27 ein gefülltes Transportgestell, also hier das Transportgestell 4, an den Vertikalförderer 21, und zwar an dessen Transportkettenpaar 23. Dieses fördert das Transportgestell so nach unten, dass es praktisch abstandslos an das Transportgestell 5 anschliesst, so dass die Entladevorrichtung 24 ununterbrochen arbeiten kann. Das leere Transportgestell 5 wird dann an den Stauraumförderer 28 im unteren, also in der zweiten Stauzone 13, übergeben. Dieser Stauraumförderer 28 dient dazu, die leeren Transportgestelle möglichst nach links in den Figuren 1 und 4 zu schieben, damit sie bei Bedarf dem Vertikalförderer 14 zugeführt werden können. Auch hier ist also durch die beiden voneinander unabängigen Kettenpaare dafür gesorgt, dass zwischen den einzelnen Transportgestellen im Vertikalförderer keine Abstände, also beim Entladen keine Pausen entstehen.

Die in den Figuren 1 und 4 dargestellte Entladevorrichtung 24 weist hier einen Doppelschieber 29 auf, der gleichzeitig die Produktereihen aus zwei übereinander befindlichen Tablaren 9 auf einen Horizontalförderer ausschiebt, nämlich aus dem unteren Tablar auf ein sich quer zur Ausgaberichtung bewegendes Förderband 30 und aus dem oberen Tablar auf eine oberhalb dieses Förderbandes 30 angeordnete Abstellplatte 31. Diese ist entweder wegziehbar oder kippbar ausgebildet, damit eine auf ihr befindliche Produktreihe dem darunter liegenden Förderband übergeben werden kann, sobald die untere der beiden gleichzeitig ausgestossenen Produktereihen weggefahren worden ist.

Je nach der Art der Produkte kann es auch zweckmässig sein, einen Abstreifer vorzusehen, der die Produktereihen von der Abstellplatte 31 auf das Förderband 30 schiebt.

Zweckmässigerweise wird, wie das in den Figuren 7 und 8 dargestellt ist, eine motorisch angetriebene Schubleiste 32 vorgesehen, die die auf das Förderband abgelegten Produktereihen 10 sofort, nachdem sie abgelegt worden sind, mit der Geschwindigkeit des Förderbandes anschiebt, damit so ein Rutschen des Fördergutes auf dem Förderband vermieden wird.

## Patentansprüche

1. Zur flexiblen Entkopplung des Produkteflusses zwischen einer Produktionsstätte und einer Weiterbearbeitungsstelle dienender, Transportgestelle (1 bis 8) mit äquidistanten Tablaren (9) aufweisender Zwischenespeicher,
- mit einer eine Beschickungsvorrichtung (11) aufweisenden Eingabestation (E) und einer eine Entladevorrichtung (24) aufweisenden Ausgabestation (A), wobei diese beiden Stationen je mit einem Vertikalförderer (14/21) für die Transportgestelle (1 bis 8) ausgerüstet sind,
- und mit zwei zwischen diesen beiden Stationen angeordneten Stauraumförderern (20/28) für die Transportgestelle enthaltenden Stauzonen, eine erste (12) für die gefüllten und eine zweite (13) für die leeren Transportgestelle,
- sowie mit Hilfsmitteln (19/27), um die Transportgestelle vom ersten Vertikalförderer (14) zur ersten Stauzone, von dieser zum zweiten Vertikalförderer (21), von diesem zur zweiten Stauzone und von dieser zum ersten Vertikalförderer (14) zu übergeben,
**dadurch gekennzeichnet,**
**dass** jeder der beiden Vertikalförderer (14/21) nur zwei mit voneinander unabhängigen Antrieben versehene Kettenpaare (15/16, 22/23) aufweist, die alle so angeordnet sind, dass die durch die beiden Trume einer Kette aufgespannten Ebenen senkrecht zur Förderrichtung (17) der Transportgestelle in den Stauzonen stehen, und
**dass** die Antriebe der Vertikalförderer so gesteuert sind, dass ein der Eingabestation übergebenes leeres Transportgestell durch das erste Kettenpaar (15) zunächst in dem Tablarabstand entsprechenden Taktbetrieb an der Beschickungsvorrichtung (11) vorbei bewegt sowie dort beschickt und nach beendigter Beschickung vom Taktbetrieb entkoppelt zur ersten Stauzone (12) geführt wird,
**dass** das nachfolgende, der Eingabestation übergebene leere Transportgestell durch das zweite Kettenpaar (16) übernommen und lückenlos im gleichen Taktbetrieb an das vorausgehende Transportgestell anschliesst, nach beendigter Beschickung ebenfalls vom Taktbetrieb entkoppelt zur ersten Stauzone (12) geführt wird,
**dass** das folgende Transportgestell wieder vom ersten Kettenpaar (15) übernommen wird,
und **dass** die der Ausgabestation übergebenen, gefüllten Transportgestelle in analoger Weise abwechslungsweise von den beiden Kettenpaaren (22/23) im Taktbetrieb an der Entladevorrichtung (24) vorbei-geführt, dort entladen und dann vom Taktbetrieb entkoppelt zur zweiten Stauzone (13) geführt werden.

2. Zwischenspeicher nach Anspruch 1, **dadurch gekennzeichnet, dass** sämtliche Ketten der beiden Vertikalförderer (14/21) mit Mitnehmern (25a, 25b. 26a, 26b, 32a, 32b, 33a. 33b) versehen sind und sämtliche Mitnehmer mindestens annähernd in einer einzigen Vertikalebene liegen, die senkrecht zur Förderrichtung der Transportgestelle in den Stauzonen stehen.

3. Zwischenespeicher nach einem der Ansprüche 1 oder 2, **dadurch gekennzeichnet, dass** die Entladevorrichtung (24) einen Doppelschieber zum gleichzeitigen Ausschieben der Produkte aus zwei übereinanderstehenden Tablaren sowie ein als Horizontalförderer ausgebildetes Förderband und eine über diesem angeordnete Abstellplatte (31) enthält.

4. Zwischenspeicher nach Anspruch 3, **dadurch gekennzeichnet, dass** die Abstellplatte (31) entweder horizontal verschiebbar oder kippbar ist, damit die auf ihr abgelegten Produkte auf das unter ihr befindliche Förderband abgelegt werden können.

5. Zwischenspeicher nach Anspruch 3, **dadurch gekennzeichnet, dass** knapp oberhalb der Aufnahmeebene der Abstellplatte (31) ein Abstreifer angeordnet ist, um die Produktereihe von der Abstellplatte (31) auf das Förderband (30) abzustreifen.

6. Zwischenspeicher nach einem der Ansprüche 1 bis 5, wobei der Ausgabestation (A) ein zur Verpackungsstation führender Horizontalförderer nachgeschaltet ist, **dadurch gekennzeichnet, dass** dicht oberhalb der Förderebene dieses Förderers eine mit einem Servoantrieb gekoppelte Schubleiste (32) angeordnet ist, deren Bewegung so auf die Beschickungskadenz der Entladevorrichtung (24) abgestimmt ist, dass sie jede auf dem Förderer ankommende Produktreihe mit der Fördergeschwindigkeit des Förderers anschiebt.

## Claims

1. Intermediate store which serves for the flexible decoupling of the product flow between a production facility and a further processing point and has transport racks (1 to 8) with equidistant shelves (9),
- with an input station (E) having a charging device (11), and with an output station (A) having a discharging device (24), these two stations each being equipped with a vertical conveyor (14/21) for the transport racks (1 to 8),
- and with two storage capacity conveyors (20/28), which are arranged between these two stations, for storage zones containing the transport racks, a first (12) for the filled transport racks and a second (13) for the empty transport racks,
- and with auxiliary means (19/27) in order to transfer the transport racks from the first vertical conveyor (14) to the first storage zone, from the latter to the second vertical conveyor (21), from the latter to the second storage zone and from the latter to the first vertical conveyor (14),
**characterized in that** each of the two vertical conveyors (14/21)
has only two pairs of chains (15/16, 22/23) which are provided with drives which are independent of each other and which are all arranged in such a manner that the planes defined by the two strands of a chain are situated perpendicularly to the conveying direction (17) of the transport racks in the storage zones, and
**in that** the drives of the vertical conveyors are controlled in such a mannerthat an empty transport rack transferred to the input station is moved by the first pair of chains (15), initially in cyclic operation corresponding to the shelf spacing, past the charging device (11) and is charged there and, after charging is finished, is guided, decoupled from the cyclic operation, to the first storage zone (12),
**in that** the following empty transport rack transferred to the input station is taken up by the second pair of chains (16) and seamlessly adjoins the previous transport rack in the same cyclic operation, after charging is finished is likewise guided, decoupled from the cyclic operation, to the first storage zone (12),
**in that** the following transport rack is taken up again by the first pair of chains (15),
and **in that** the filled transport racks transferred to the output station are guided in an analogous manner and in an alternating manner by the two pairs of chains (22/23) past the discharging device (24) in cyclic operation, are discharged there and are then guided, decoupled from the cyclic operation, to the second storage zone (13).

2. Intermediate store according to Claim 1, **characterized in that** all of the chains of the two vertical conveyors (14/21) are provided with drivers (25a, 25b, 26a, 26b, 32a, 32b, 33a, 33b) and all of the drivers lie at least approximately in a single vertical plane which is situated perpendicularly to the conveying direction of the transport racks in the storage zones.

3. Intermediate store according to either of Claims 1 and 2, **characterized in that** the discharging device (24) contains a double slide for simultaneously pushing the products out of two shelves standing one above the other, and a conveyor belt which is designed as a horizontal conveyor and a depositing plate (31) arranged above the latter.

4. Intermediate store according to Claim 3, **characterized in that** the depositing plate (31) can either be displaced horizontally or can be tipped, so that the products placed on it can be placed onto the conveyor belt situated below it.

5. Intermediate store according to Claim 3, **characterized in that** a stripper is arranged just above the receiving plane of the depositing plate (31) in order to strip off the row of products from the depositing plate (31) onto the conveyor belt (30).

6. Intermediate store according to one of Claims 1 to 5, a horizontal conveyor leading to the packaging station being connected downstream of the output station (A), **characterized in that** a push bar (32) is arranged just above the conveying plane of this conveyor, the push bar being coupled to a servo drive and its movement being coordinated with the charging cadence of the discharging device (24) in such a manner that it pushes on each row of products arriving in the conveyor at the conveying speed of the conveyor.

## Revendications

1. Un tampon intermédiaire servant au découplage flexible du flux de produits entre un site de production et un lieu de traitement ultérieur, comprenant des supports de transport (1 à 8) avec des plateaux équidistants (9),
- avec une station d'entrée (E) comprenant un dispositif de chargement (11) et une station de sortie (A) comprenant un dispositif de déchargement (24), où ces deux stations sont chacune munie d'un transporteur vertical (14/21) pour les supports de transport (1 à 8),
- et avec deux transporteurs de l'espace de stockage (20/28), disposés entre ces deux stations, pour les zones de stockage comprenant les supports de transport, une première (12) pour les supports de transport remplis et une deuxième (13) pour les vides,
- ainsi qu'avec des moyens auxiliaires (19/27) afin de transférer les supports de transport du premier transporteur vertical (14) vers la première zone de stockage, de celle-ci vers le deuxième transporteur vertical (21), de celui-ci vers la deuxième zone de stockage et de celle-ci vers le premier transporteur vertical (14),
**caractérisé**
**en ce que** chacun des deux transporteurs verticaux (14/21) ne comprend que deux paires de chaînes (15/16, 22/23) munies de deux entraînements indépendants l'un de l'autre, qui sont disposées de telle façon que les plans formés par les deux brins d'une chaîne soient perpendiculaires à la direction de transport (17) des supports de transport dans les zones de stockage, et
**en ce que** les entraînements des transporteurs verticaux sont commandés de telle façon qu'un support de transport vide qui est transféré à la station d'entrée est d'abord passé à l'aide de la première paire de chaînes (15) à côté du dispositif de chargement (11) en une cadence selon la distance entre les plateaux, y est chargé et, une fois le chargement fini, est découplé du fonctionnement en cadence et amené vers la première zone de stockage (12),
**en ce que** le support de transport vide suivant, transféré à la station d'entrée est pris en charge par la deuxième paire de chaînes (16) et suit directement dans la même cadence le support de transport précédent, une fois le chargement fini, il est également découplé du fonctionnement en cadence et amené vers la première zone de stockage (12),
**en ce que** le support de transport suivant est à nouveau pris en charge par la première paire de chaînes (15),
**et en ce que** les supports de transport remplis transférés à la station de sortie sont passés par les deux paires de chaînes (22/23) de manière analogue à tour de rôle en cadence à côté du dispositif de déchargement (24), y sont déchargés et ensuite découplés du fonctionnement en cadence et amenés vers la deuxième zone de stockage (13).

2. Un tampon intermédiaire selon la revendication 1, **caractérisé en ce que** l'ensemble des chaînes des deux transporteurs verticaux (14/21) est muni d'entraîneurs (25a, 25b, 26a, 26b, 32a, 32b, 33a, 33b) et que l'ensemble des entraîneurs se situe au moins presque sur un seul plan vertical, qui est perpendiculaire à la direction de transport des supports de transport dans les zones de stockage.

3. Un tampon intermédiaire selon les revendications 1 ou 2, **caractérisé en ce que** le dispositif de déchargement (24) comprend un tiroir double pour pousser simultanément les produits de deux plateaux superposés ainsi qu'une bande transporteuse sous forme d'un transporteur horizontal et un plateau d'arrêt (31) disposé au-dessus de celle-ci.

4. Un tampon intermédiaire selon la revendication 3, **caractérisé en ce que** le plateau d'arrêt (31) est soit horizontalement mobile soit basculant afin que les produits déposés dessus puissent être déposés sur la bande transporteuse se situant en dessous.

5. Un tampon intermédiaire selon la revendication 3, **caractérisé en ce qu'**une raclette est disposée juste au-dessus du plan de réception du plateau d'arrêt (31) afin de pousser les rangées de produits du plateau d'arrêt (31) sur la bande transporteuse (30).

6. Un tampon intermédiaire selon l'une quelconque des revendications 1 à 5, où un transporteur horizontal est placé après la station de sortie (A) menant à la station d'emballage, **caractérisé en ce qu'**une coulisse (32) couplée à une servocommande est disposée tout près au-dessus du plan de transport de ce transporteur, dont le mouvement est accordé à la cadence de chargement du dispositif de déchargement (24) de telle façon qu'elle pousse chaque rangée de produits arrivant sur le transporteur avec la vitesse de transport du transporteur.
